# EUROPEAN PATENT APPLICATION

(11) **EP 2 587 645 A1**
(43) Date of publication of application: **01.05.2013**
(21) Application number: 11800577.6
(22) Date of filing: 06.06.2011
(51) Int. Cl.: H02K 35/02

(54) **OSCILLATING POWER GENERATOR**

(30) Priority: 28.06.2010 JP 2010146964
(71) Applicant: Brother Kogyo Kabushiki Kaisha, Nagoya-shi, Aichi 467-8561 (JP)
(72) Inventor: TAKAHASHI, Ryoya, Nagoya-shi Aichi 467-8561 (JP); IIJIMA, Ryuta, Nagoya-shi Aichi 467-8561 (JP); NISHIHARA, Keisuke, Nagoya-shi Aichi 467-8561 (JP)
(74) Representative: Smith, Samuel Leonard
(86) International application number: PCT/JP2011/062930
(87) International publication number: WO 2012/002109

(57) **Abstract**

A vibration-based power generator is provided that can improve electrical generation efficiency by including a movement-enabling channel portion connected to a body portion of a cylindrical member. The vibration-based power generator includes a cylindrical member that is provided inside a cylindrical housing and that is formed from a non-magnetic material, a coil disposed along the cylindrical member, and a moving member that includes a permanent magnet and that is provided such that the moving member can be moved reciprocally within the cylindrical member in a longitudinal direction of the cylindrical member. The cylindrical member includes an anchor portion that projects from at least one end of a body portion of the cylindrical member and that is adapted to fix an end of the coil, and a movement-enabling channel portion that is connected to the one end of the body portion and in which the moving member can be moved reciprocally.

## Description

### Technical Field

The present disclosure relates to a vibration-based power generator that includes a movement-enabling channel portion that is connected to a body portion of a cylindrical member.

### Background Art

An electromagnetic induction type of vibration-based power generator with a comparatively simple structure is known as an electrical generation device that converts kinetic energy into electrical energy. The vibration-based power generator includes a circular cylindrical bobbin case that is made of a non-magnetic material, a permanent magnet that can be moved reciprocally through an interior space of the bobbin case, and a coil that is wound around the outside of the bobbin case in a position where the coil intersects the magnetic flux of the permanent magnet.

Incidentally, such a coil that is wound around a bobbin case is also used in other technical fields, and an inductance element, such as that described in Patent Document 1, for example, is known.

The inductance element is an element in which a coil is wound around the body of a bobbin case. The ends of the coil are bound to anchor portions that project from the bobbin case. The ends of the coil are affixed by soldering to the anchor portions by immersing, in a solder bath, the anchor portions to which the ends of the coil are bound.

### Citation List

### Patent Literature

Patent Document 1: Japanese Laid-Open Utility Model Publication No. 5-25706

### Summary of Invention

### Problem to Be Solved by the Invention

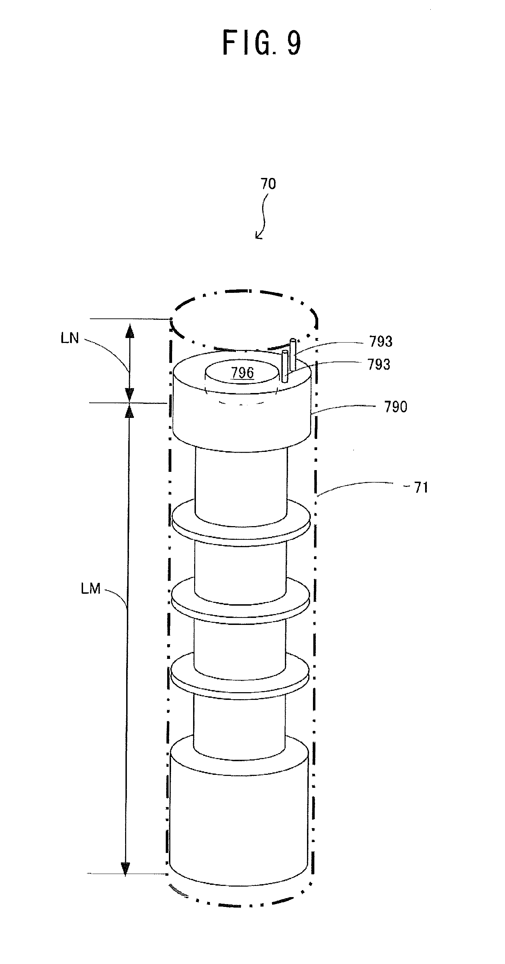

In a case where this sort of bobbin case is used in a known vibration-based power generator 70, as shown in FIG. 9, movement restricting portions 796 may be provided at both ends of the inside of a bobbin case 790 in order to prevent a moving member that includes a permanent magnet and is not shown in the drawings from coming out of the interior of the bobbin case 790.

The movement restricting portions 796 shorten the distance that the moving member that is not shown in the drawings can be moved reciprocally in the longitudinal direction of the bobbin case 790 of the vibration-based power generator 70, in relation to the length of a housing 71 that is indicated by a dash-and-two-dot line, by a distance LN that is the sum of the length of fixed pins 793 and the lengths of the movement restricting portions 796. Furthermore, even in a case where the movement restricting portions are provided on the outside of the bobbin case 790, the distance that the moving member can be moved reciprocally is shortened by a distance that is the length of fixed pins 793. Therefore, the electrical generating efficiency of the vibration-based power generator 70 may be decreased.

It is an object of the present disclosure to provide a vibration-based power generator that can improve the electrical generating efficiency by being provided with a movement-enabling channel portion that is connected to a body portion of a cylindrical member.

### Solution to Problem

To achieve the aforementioned object, a vibration-based power generator according to a first disclosure is a vibration-based power generator that includes a cylindrical member that is provided inside a cylindrical housing and that is formed from a non-magnetic material, a coil that is disposed along the cylindrical member, and a moving member that includes a permanent magnet and that is provided such that the moving member can be moved reciprocally within the cylindrical member in a longitudinal direction of the cylindrical member. The cylindrical member includes an anchor portion that projects from at least one end of a body portion of the cylindrical member and that is adapted to fix an end of the coil, and a movement-enabling channel portion that is connected to the one end of the body portion and in which the moving member can be moved reciprocally.

In a vibration-based power generator according to a second disclosure, in addition to a structure according to the aforementioned first disclosure, the movement-enabling channel portion may be longer than a length of the anchor portion in the longitudinal direction.

In a vibration-based power generator according to a third disclosure, in addition to the structure according to the aforementioned first disclosure, a cross-sectional area of the movement-enabling channel portion in a direction that is orthogonal to the direction in which the moving member can be moved may be greater than a cross-sectional area of an open portion of the cylindrical member in the direction that is orthogonal to the direction in which the moving member can be moved.

In a vibration-based power generator according to a fourth disclosure, in addition to the structure according to the aforementioned first disclosure, the cylindrical member may include a guide member that is mountable on the one end of the body portion and that includes the movement-enabling channel portion adapted to connect to an open portion of the cylindrical member and a cavity portion adapted to cover the anchor portion.

A cylindrical member according to a fifth disclosure is a cylindrical member that is adapted for use in the vibration-based power generator according to the fourth disclosure, and includes a body portion that is cylindrical, around which a coil can be wound, and on which an anchor portion adapted to anchor an end of the coil can be provided, and a guide member that includes a movement-enabling channel portion adapted to connect to an open portion of the body portion and a cavity portion adapted to cover the anchor portion.

### Effects of the Invention

According to the vibration-based power generator of the first disclosure, the cylindrical member includes an anchor portion that projects from a body portion of the cylindrical member, that is formed at least one end of the body portion, and that is adapted to fix an end of the coil; and a movement-enabling channel portion that is connected to the one end of the body portion and in which the moving member can be moved reciprocally, so the distance that the moving member can be moved may be reliably ensured, and the electrical generation efficiency of the vibration-based power generator may be improved.

According to the vibration-based power generator of the second disclosure, in addition to the effects of the first disclosure, the movement-enabling channel portion may be longer than a length of the anchor portion in the longitudinal direction, so the distance that the moving member can be moved may be more reliably ensured, and the electrical generation efficiency of the vibration-based power generator may be improved.

According to the vibration-based power generator of the third disclosure, in addition to the effects of the first disclosure, a cross-sectional area of the movement-enabling channel portion in a direction that is orthogonal to the direction in which the moving member can be moved may be greater than a cross-sectional area of an open portion of the cylindrical member in the direction that is orthogonal to the direction in which the moving member can be moved, so it may become easy for the movement-enabling channel portion that is connected to the cylindrical member to be connected to the open portion of the cylindrical member, the moving member may be smoothly moved inside them, and the electrical generation efficiency of the vibration-based power generator may be improved.

According to the vibration-based power generator of the fourth disclosure, in addition to the effects of the first disclosure, the cylindrical member may include a guide member that is mountable on the one end of the body portion and that includes the movement-enabling channel portion adapted to connect to an open portion of the cylindrical member and a cavity portion adapted to cover the anchor portion, so the movement-enabling channel portion may be easily formed, reliably ensuring the distance that the moving member can be moved, and the electrical generation efficiency of the vibration-based power generator may be improved.

The cylindrical member of the fifth disclosure is a cylindrical member that is adapted for use in the vibration-based power generator according to claim 4, and that includes a body portion that is cylindrical, around which a coil can be wound, and on which an anchor portion adapted to anchor an end of the coil can be provided, and a guide member that includes a movement-enabling channel portion adapted to connect to an open portion of the body portion and a cavity portion adapted to cover the anchor portion, so the movement-enabling channel portion may be easily formed, reliably ensuring the distance that the moving member can be moved, and the electrical generation efficiency of the vibration-based power generator may be improved.

### Brief Description of Drawings

FIG. 1 is a section view of a vibration-based power generator of a present embodiment.
FIG. 2 is a schematic oblique view that shows a relationship between a bobbin case and a guide member of the present embodiment.
FIG. 3A is a section view of the guide member in FIG. 2 in a direction that is orthogonal to a Y direction.
FIG. 3B is a section view of the bobbin case in a direction that is orthogonal to the Y direction.
FIG. 4 is an oblique view that shows a state in which a coil is wound around the bobbin case of the present embodiment.
FIG. 5 is a figure that shows a relationship between a maximum generated electric power and a distance that a moving member is moved in a case where the vibration-based power generator is vibrated.
FIG. 6 is a schematic oblique view that shows a relationship between a bobbin case and a guide member of another example.
FIG. 7 is a vibration-based power generator of another embodiment in which a guide member of yet another example is used.
FIG. 8 is a schematic oblique view that shows a relationship between the bobbin case and the guide member of the yet another example.
FIG. 9 is a schematic oblique view that shows a vibration-based power generator of a known technology.

### Description of Embodiments

### Present embodiment

Hereinafter, a preferred embodiment of the present disclosure will be explained with reference to the drawings.

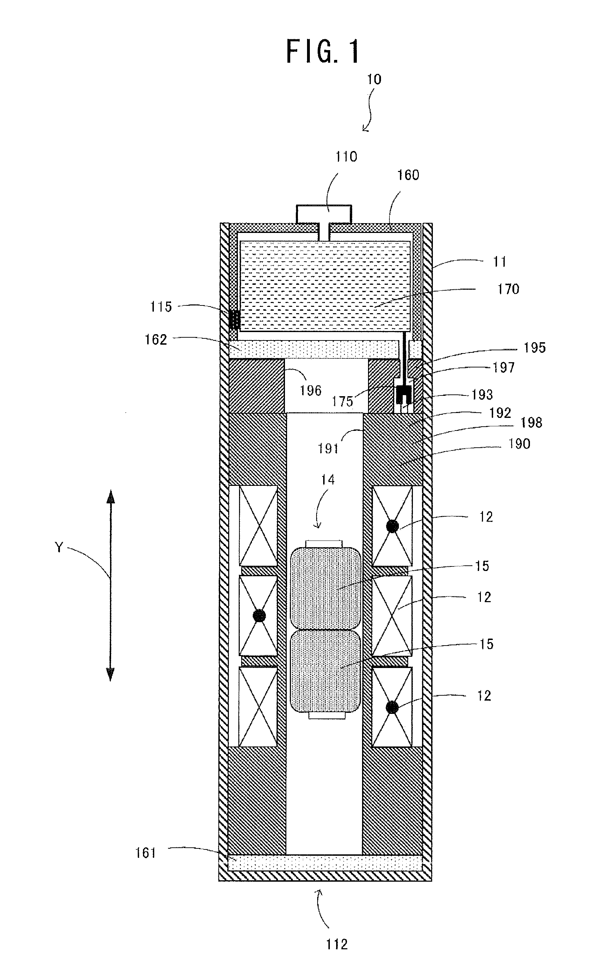

As shown in FIG. 1, a vibration-based power generator 10 of the present embodiment has the shape of a dry-cell battery and may be used as a substitute for a dry-cell battery by being placed in a battery case, which is not shown in the drawings, for an external device such as a television remote control, a flashlight, or the like, which is not shown in the drawings. The battery case may have positive and negative contact hardware to which a positive electrode 110 and a negative electrode 112 of the vibration-based power generator 10 are connected.

Hereinafter, a structure of the vibration-based power generator 10 of the present embodiment will be explained using FIGS. 1 to 4.

A housing 11 contains various structural members of the vibration-based power generator 10 that will hereinafter be explained, is formed in a circular cylindrical shape with a bottom, and a top portion of the housing 11 is open. In the present embodiment, the housing 11 is formed by a magnetic body that is made of metal. The outer circumferential portion of the body of the housing 11 is covered with a film. After a bobbin case 190, a guide member 195, a moving member 14, a circuit portion 170, and the like, which will be described below, are placed inside the housing 11, a cover 160 is fitted into the housing 11 and affixed such that the various structural members inside the housing 11 may not come out. Examples of the magnetic body include martensitic and ferritic stainless steel materials and the like.

The positive electrode 110, which is connected to the circuit portion 170, which will be described below, is provided on the top of the housing 11, and the negative electrode 112 is provided on the bottom of the housing 11. The negative electrode 112 is provided such that an electric current may flow through a negative electrode connecting portion 115 that is connected to the circuit portion 170 by way of the housing 11, which is made from a magnetic material that is made of metal. The negative electrode 112 serves as the bottom of the housing 11.

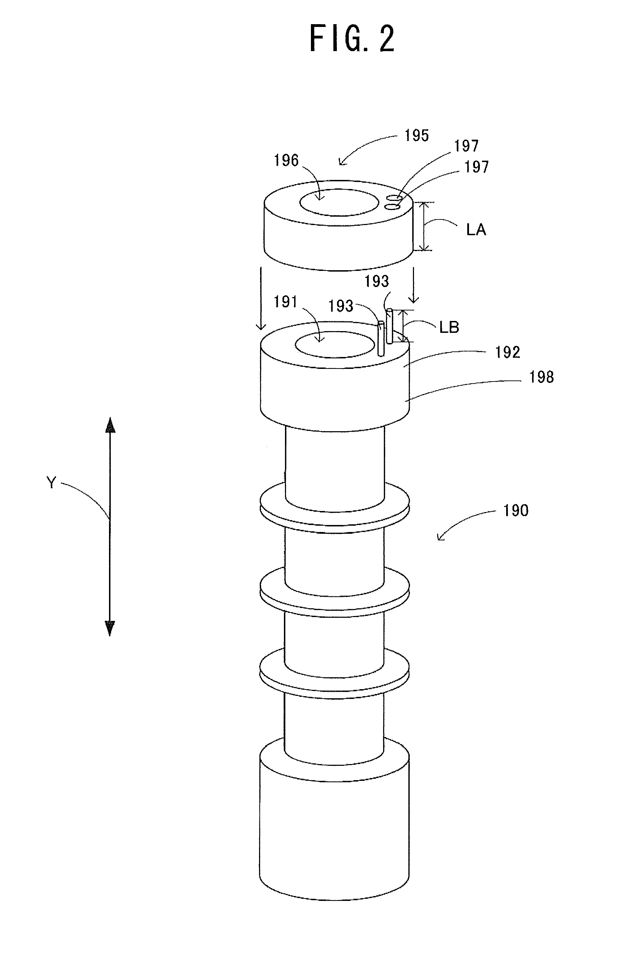

The bobbin case 190 has a circular cylindrical shape, and anchor portions 193 are formed in two locations on an end portion 192 of the bobbin case 190, as shown in FIG. 2, the anchor portions 193 being fixed pins that are made of metal that are formed for affixing a coil 12, which will be described below, to the end portion 192. The anchor portions 193 are formed such that the anchor portions 193 project from a body portion 198 of the bobbin case 190 in the direction in which the moving member may be moved. The direction in which the moving member may be moved is the Y direction that is shown in FIG. 2. The body portion 198 configures the bobbin case 190 and corresponds to the body portion of the present disclosure.

The reason why the anchor portions 193 are formed in two locations on the bobbin case 190 is for separately affixing both ends of the coil 12, which will be described below. In addition, an open portion 191, in which the moving member 14, which will be described below, can be moved reciprocally, is formed in the interior of the bobbin case 190. The guide member 195 is provided on the end portion 192 end of the bobbin case 190.

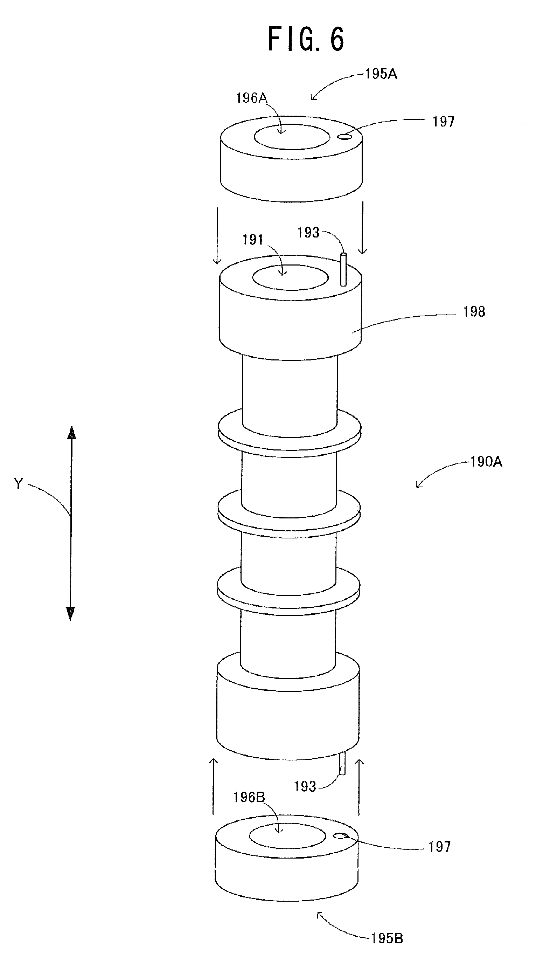

In the present embodiment, the anchor portions 193 are provided in two locations on the end side 192 of the bobbin case, but one of the anchor portions 193 may be provided in one location on each of the two ends of the bobbin case 190, as shown in FIG. 6, which will be described below.

The guide member 195 is provided on the upper end of the body portion 198 of the bobbin case 190. The guide member 195 has the same sort of circular cylindrical shape as the bobbin case 190, and a movement-enabling channel portion 196, in which the moving member 14, which will be described below, can be moved reciprocally, is formed in the guide member 195. The movement-enabling channel portion 196 is connected to the open portion 191 of the bobbin case 190 and is formed such that the moving member 14 can be smoothly moved reciprocally inside the open portion 191 and the movement-enabling channel portion 196. The bobbin case 190 and the guide member 195 correspond to a cylindrical member of the present disclosure.

The shape of the movement-enabling channel portion 196 is not particularly limited, but in the present embodiment, the shape of the movement-enabling channel portion 196 is a circular cylindrical shape that is substantially identical to the shape of the open portion 191 of the bobbin case 190.

The guide member 195 is provided with cavities 197 that can accommodate the anchor portions 193 that project from the bobbin case 190 in FIG. 1. The cavities 197 extend through the guide member 195. As shown in FIG. 1, conductor wires that extend from connecting portions 175 that are connected to the anchor portions 193 are connected to the circuit portion 170 through the cavities 197.

The guide member 195 is provided on the end portion 192 end in the upper portion of the bobbin case 190. As shown in FIG. 2, the two cavities 197, which are formed in the guide member 195, are placed over the two anchor portions 193, which are formed on the end portion 192 end of the bobbin case 190, such that the guide member 195 is affixed to the end portion 192 end of the bobbin case 190. In this affixed state, the open portion 191 of the bobbin case 190 is connected to the movement-enabling channel portion 196 of the guide member 195, and the moving member 14, which will be described below, can be moved smoothly in the Y direction.

A length LA of the guide member 195 in the Y direction is formed such that the length LA is longer than a length LB of the anchor portions 193 in the Y direction. This makes it possible to reliably provide the movement-enabling channel portion 196 for the moving member 14 to be moved.

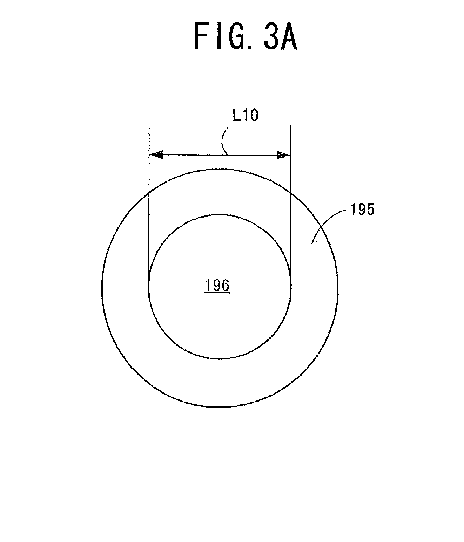

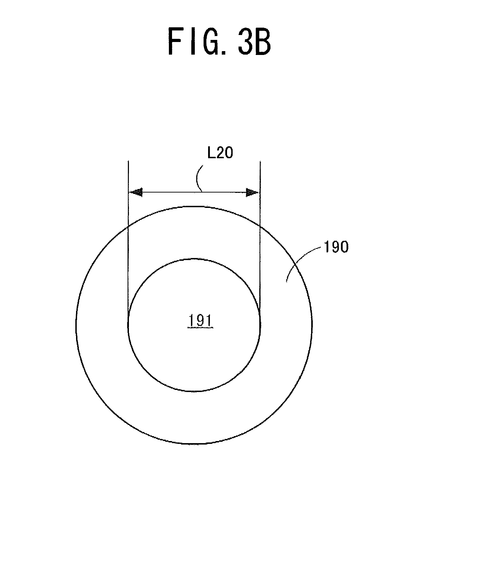

It is preferable for an inside diameter L10 of the movement-enabling channel portion 196 of the guide member 195, which is shown in FIG. 3A, to be formed such that the inside diameter L10 is slightly larger than an inside diameter L20 of the open portion 191 of the bobbin case 190, which is shown in FIG. 3B. In other words, it may be good for the sectional area of the movement-enabling channel portion 196 in the direction that is orthogonal to the direction of movement of the moving member 14 to be greater than the sectional area of the open portion 191 in the interior of the bobbin case 190 in the direction that is orthogonal to the direction of movement of the moving member 14. Having this relationship between the lengths makes it easy for the movement-enabling channel portion 196 of the guide member 195 to be connected to the open portion 191 of the bobbin case 190. Therefore, the moving member 14 can be moved smoothly through the open portion 191 of the bobbin case 190 and the movement-enabling channel portion 196 of the guide member 195. Moreover, even in a case where the movement-enabling channel portion 196 of the guide member 195 is affixed such that the movement-enabling channel portion 196 is slightly misaligned in relation to the open portion 191 of the bobbin case 190, there is little chance that the guide member 195 may impede the movement of the moving member 14.

As long as the moving member 14 can be moved smoothly through the open portion 191 of the bobbin case 190 and the movement-enabling channel portion 196 of the guide member 195, the inside diameter L10 of the movement-enabling channel portion 196 of the guide member 195 may be the same size as the inside diameter L20 of the open portion 191 of the bobbin case 190, and the inside diameter L10 of the movement-enabling channel portion 196 of the guide member 195 may be slightly smaller than the inside diameter L20 of the open portion 191 of the bobbin case 190.

In the present embodiment, the guide member 195 is formed into a circular cylindrical shape that is substantially identical to the shape of the bobbin case 190, but the shape of the guide member 195 is not particularly limited to that shape, and as long as a movement-enabling channel portion is connected to the open portion 191 of the bobbin case 190 such that the moving member can be moved reciprocally, the shape of the bobbin case 190 and the shape of the guide member 196 may be different. For example, a movement-enabling channel portion with a tube shape that is smaller than the outside diameter of the cross-sectional shape of the bobbin case 190 may be provided such that the movement-enabling channel portion projects from the end portion 192 end of the bobbin case 190 within the boundary of the end portion 192.

The bobbin case 190 and the guide member 195 are formed from non-magnetic materials. For example, the bobbin case 190 and the guide member 195 may be constructed from resins such as acrylic, ABS, polyacetal, polyethylene terephthalate, or the like, or from ceramics such as alumina, glass or the like.

In the present embodiment, the bobbin case 190, the guide member 195, and the housing 11 have circular cylindrical shapes, but they are not limited to those shapes, and the bobbin case 190, the guide member 195, and the housing 11 may have elliptical cylindrical shapes, or other polygonal cylindrical shapes such as square cylinders, card-type flat plate shapes, or the like.

A movement restricting portion 161 and a movement restricting portion 162 are formed as flat plates with substantially circular cylindrical shapes, as shown in FIG. 1. The movement restricting portion 161 and the movement restricting portion 162 are respectively provided on the outer end of the bottom of the bobbin case 190 and the outer end of the top of the guide member 195, such that the moving member 14, which will be described below, does not come out from the interior of the bobbin case 190. The movement restricting portion 162, which is disposed on the outer end of the top of the bobbin case 190, is provided with a cutout such that the conductor wires of the connecting portion 175 can pass through the movement restricting portion 162.

In the present embodiment, the movement restricting portion 161 and the movement restricting portion 162 serve as cushioning members for preventing damage from impact when the moving member 14 is moved through the interior of the bobbin case 190 in FIG. 1. The movement restricting portion 161 and the movement restricting portion 162 are formed from elastic materials, and examples of the elastic materials include silicone rubber, isoprene rubber, nitrile rubber, butadiene rubber, and the like.

The coil 12 is an electromagnetic induction coil. The coil 12 is wound around the outer circumferential face of the bobbin case 190 in a direction that is orthogonal to the longitudinal direction of the bobbin case 190, and fixed. The longitudinal direction of the bobbin case 190 is the Y direction in FIG. 1. Both ends of the coil 12 are connected to external wiring by way of a rectifier portion and a storage portion that are not shown in the drawings. The material of the coil 12 is an enameled copper wire or the like.

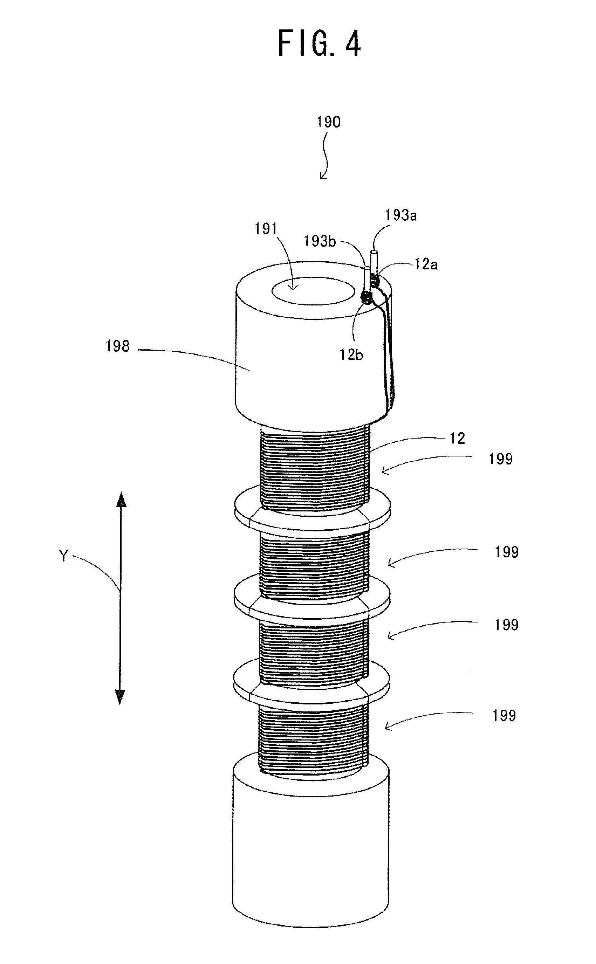

As shown in FIG. 4, the coil 12 is wound into grooved portions 199 that are formed in the body of the bobbin case 190. The winding of the coil 12 is started by temporarily binding a coil starting end 12a to an anchor portion 193a. The winding of the coil 12 is started from the grooved portion 199 in the top portion of the bobbin case 190, and when the coil 12 has been wound uniformly to the grooved portion 199 in the bottom portion, the coil 12 is once again wound toward the grooved portion 199 in the top portion. When the winding has been completed to the grooved portion 199 in the topmost portion, a terminal end 12b of the coil 12 is wound around an anchor portion 193b.

Then, when the winding of the coil 12 onto the bobbin case 190 has been completed, the anchor portion 193a and the anchor portion 193b are immersed in a solder bath, affixing the coil starting end 12a and the terminal end 12b by soldering the coil starting end 12a and the terminal end 12b to the anchor portion 193a and the anchor portion 193b, respectively.

After the coil 12 is wound around the bobbin case 190 and affixed to the anchor portions 193 in this manner, the guide member 195 that is shown in FIG. 2 is mounted from the top side of the bobbin case 190. Therefore, the guide member 195 is easy to assemble, and it is easy to connect the open portion 191 of the bobbin case 190 and the movement-enabling channel portion 196 of the guide member 195.

In the present embodiment, in FIG. 1, the coil 12 is provided by being wound around the outer face of a portion of a hollow member 190, but the coil 12 may be provided by being wound around the entire circumference of the hollow member 190, by being provided in a plurality of locations, and by being provided around an inner circumference. Here, the coil 12 corresponds to a coil of the present disclosure.

The moving member 14 is provided such that the moving member 14 can be moved reciprocally in the Y direction within the bobbin case 190 in FIG. 1. The moving member 14 includes a permanent magnet 15, and in the present embodiment, the moving member 14 is constructed such that two of the permanent magnets 15 with circular cylindrical shapes are fixed with like poles facing each other. The moving member 14 may be fixed by one permanent magnet. A plurality of the permanent magnets may not be provided such that like poles face each other.

In the present embodiment, the moving member 14 has a circular cylindrical shape, but it is not limited to that shape. However, it is preferable for the moving member 14 to have the same cross-sectional shape as the open portion 191 and the movement-enabling channel portion 196.

The circuit portion 170 is disposed on top of the movement restricting portion 162, as shown in FIG. 1, and includes the rectifier portion and the storage portion, which are not shown in the drawings. The conductor wires that extend from the connecting portions 175 that are connected to the coil 12 are connected to the rectifier portion. The rectifier portion may convert the alternating current that comes from the coil 12 through the conductor wires into direct current. A diode bridge, for example, can be used as this sort of rectifier portion.

The rectifier portion is connected to the storage portion through the conductor wires. The storage portion may store the electric current that has been rectified by the rectifier portion. A capacitor or a secondary battery, for example, may be used as the storage portion. The rectifier portion and the storage portion are connected through wiring to the positive electrode 110 and the negative electrode connecting portion 115. The storage portion may output the stored electric current through the positive electrode 110 and the negative electrode connecting portion 115 and then from the negative electrode 112 by way of the housing 11.

### Operation of the vibration-based power generator

Here, the operation of the vibration-based power generator 10 of the present embodiment will be explained using FIG. 1. First, a user may shake, in the longitudinal direction of the bobbin case 190, the external device into which the vibration-based power generator 10 has been incorporated. The longitudinal direction of the bobbin case 190 is the Y direction in FIG. 1. The force that is applied to the vibration-based power generator 10 by the shaking may be transmitted as kinetic energy to the moving member 14. The moving member 14 may be moved reciprocally through the interior of the bobbin case 190 in the longitudinal direction, entering and leaving the open portion 191 of the bobbin case 190, which is covered by the coil 12, and the movement-enabling channel portion 196 of the guide member 195.

When the moving member 14 passes through the open space inside the coil 12, lines of magnetic flux that are generated by the moving member 14 may intersect the coil 12 orthogonally, so that an induced electric current may be generated as an induced electromotive force. An alternating current may be generated by the moving member 14's repeatedly entering and leaving the open portion 191 of the bobbin case 190, which is on the inside of the coil 12, and the movement-enabling channel portion 196 of the guide member 195. The alternating current may be rectified by the rectifier portion of the circuit portion 170, and voltage may be accumulated in the storage portion, up to a specified voltage, by the rectified electric current. The electric power that is accumulated in the storage portion may be output to the external device when the power supply of the external device is turned on. The external device may thus operate on the voltage that is output from the vibration-based power generator 10.

At this time, in the vibration-based power generator 10 of the present embodiment, the guide member 195 has been provided on the end portion 192 end of the bobbin case 190, on which the anchor portions 193 are provided. Because the open portion 191 of the bobbin case 190 and the movement-enabling channel portion 196 of the guide member 195 are connected, the distance that the moving member 14 may be moved may be reliably ensured, and the electrical generation efficiency of the vibration-based power generator 10 may be improved.

Particularly in a case where the vibration-based power generator 10 has the shape of a dry-cell battery, as it does in the present embodiment, the shape and the size are prescribed by standards, so ensuring the distance that the moving member 14 may be moved within the limited size is extremely important. Therefore, the providing of the movement-enabling channel portion in which the moving member 14 may be moved, as in the present embodiment, may increase the distance that the moving member may be moved, and may improve the electrical generation efficiency of the vibration-based power generator 10.

In a case where, by way of experiment, the end of the bobbin case 190 where the anchor portions 193 are provided is opened, it would seem to be possible to ensure the distance that the moving member may be moved in the direction in which the moving member 14 may be moved, but the moving member 14 might rattle at the end and the like, and there might be a tendency for the velocity at which the moving member is moved to decrease and for the electrical generation efficiency to decrease. Therefore, in order to reliably increase the electrical generation efficiency, it may be necessary to provide the movement-enabling channel portion of the present disclosure.

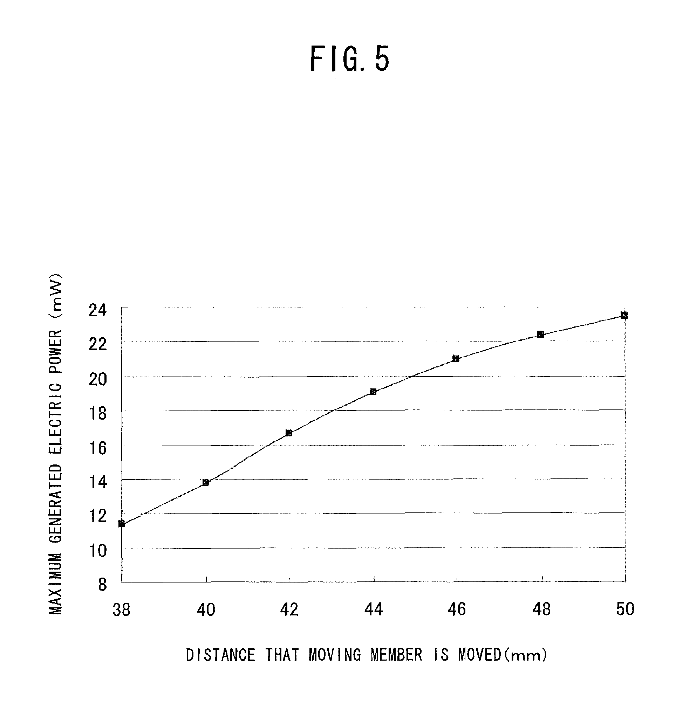

Next, the relationship between the maximum generated electric power and the distance that the moving member is moved when the vibration-based power generator is vibrated under constant conditions will be explained. As shown in FIG. 5, it can be seen that the maximum electric power that is generated by the vibration-based power generator increases as the distance that the moving member is moved becomes longer. That is, as the distance that the moving member is moved becomes longer, the electrical generation efficiency of the vibration-based power generator improves. For example, the maximum generated electric power can be increased by approximately twenty percent by increasing the distance that the moving member is moved by 2 millimeters, from 38 millimeters to 40 millimeters.

In the present embodiment, an example has been shown in which the guide member 195 is provided on the end portion 192 of the bobbin case 190, but as shown in FIG. 6, guide members may be provided on both ends of the bobbin case 190. In FIG. 6, the reference numerals that are the same as in FIG. 2 indicate the same structures, and explanation of the those structures will be omitted.

On a bobbin case 190A, one of the anchor portions 193 for anchoring the coil 12 is formed on each of the top end and the bottom end of the bobbin case 190A in FIG. 6.

A guide member 195A is disposed such that a movement-enabling channel portion 196A of the guide member 195A is connected to the upper end of the open portion 191 of the bobbin case 190A. In addition, a guide member 195B is disposed such that a movement-enabling channel portion 196B of the guide member 195B is connected to the lower end of the open portion 191 of the bobbin case 190A.

In a case where the anchor portions 193 are formed in this way on both ends of the bobbin case 190A, the movement-enabling channel portion 196A and the movement-enabling channel portion 196B are provided on both ends of the bobbin case 190A, so it may be possible to more reliably ensure the distance that the moving member 14 that is shown in FIG. 1 may be moved in the interior of the housing of the vibration-based power generator 10, and it may be possible to improve the electrical generation efficiency of the vibration-based power generator 10.

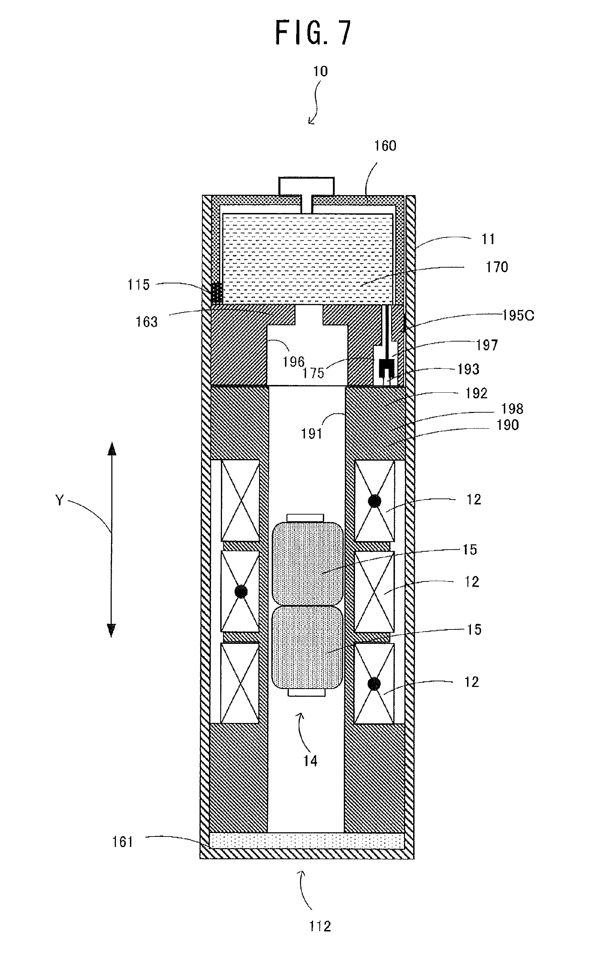

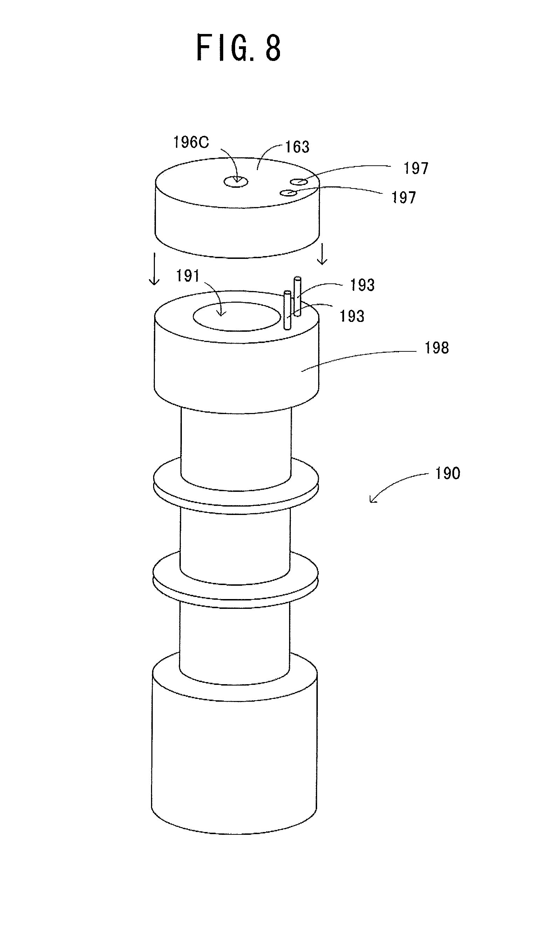

Furthermore, a guide member 195C may be provided with an upper end portion 163 that is narrowed, as shown in FIGS. 7 and 8. In this case, selecting an appropriate structural material for the guide member 195C makes it possible for the upper end portion 163 to fulfill the roles of a movement restricting portion and a cushioning member, eliminating the need to provide the movement restricting portion and the cushioning member separately, and making it possible to reduce the number of parts.

In the present embodiment, the vibration-based power generator 10 has the shape of a dry-cell battery, but its shape is not particularly limited. The present disclosure is not limited to the embodiment that is described above, and various types of modifications can be made within the scope of the present disclosure without deviating from its essence.

### Description of the Reference Numerals

10 vibration-based power generator
11 housing
12 coil
14 moving member
190 bobbin case
196 movement-enabling channel portion

## Claims

1. A vibration-based power generator comprising:
a cylindrical member that is provided inside a cylindrical housing and that is formed from a non-magnetic material;
a coil that is disposed along the cylindrical member; and
a moving member that includes a permanent magnet and that is provided such that the moving member can be moved reciprocally within the cylindrical member in a longitudinal direction of the cylindrical member,
wherein
the cylindrical member includes: an anchor portion that projects from at least one end of a body portion of the cylindrical member and that is adapted to fix an end of the coil; and a movement-enabling channel portion that is connected to the one end of the body portion and in which the moving member can be moved reciprocally.

2. The vibration-based power generator according to claim 1, wherein
the movement-enabling channel portion is longer than a length of the anchor portion in the longitudinal direction.

3. The vibration-based power generator according to claim 1, wherein
a cross-sectional area of the movement-enabling channel portion in a direction that is orthogonal to the direction in which the moving member can be moved is greater than a cross-sectional area of an open portion of the cylindrical member in the direction that is orthogonal to the direction in which the moving member can be moved.

4. The vibration-based power generator according to claim 1, wherein
the cylindrical member includes a guide member that is mountable on the one end of the body portion and that includes the movement-enabling channel portion adapted to connect to an open portion of the cylindrical member and a cavity portion adapted to cover the anchor portion.

5. A cylindrical member that is adapted for use in the vibration-based power generator according to claim 4, comprising:
a body portion that is cylindrical, around which a coil can be wound, and on which an anchor portion adapted to anchor an end of the coil can be provided; and
a guide member that includes a movement-enabling channel portion adapted to connect to an open portion of the body portion and a cavity portion adapted to cover the anchor portion.
